Europäisches Patentamt

**European Patent Office**

**Office européen des brevets**

(11) Veröffentlichungsnummer: **0 145 837**
**B1**

(12) **EUROPÄISCHE PATENTSCHRIFT**

(45) Veröffentlichungstag der Patentschrift:
28.06.89

(51) Int. Cl.⁴: **H 02 K 7/102**

(21) Anmeldenummer: **84109325.5**

(22) Anmeldetag: **06.08.84**

(54) **Bremsmotor mit Handbremslüftung.**

(30) Priorität: **19.12.83 DE 3345869**

(43) Veröffentlichungstag der Anmeldung:
**26.06.85 Patentblatt 85/26**

(45) Bekanntmachung des Hinweises auf die Patenterteilung: **28.06.89 Patentblatt 89/26**

(84) Benannte Vertragsstaaten:
**AT BE CH DE FR GB IT LI LU NL SE**

(56) Entgegenhaltungen:
**DE--B-- 1 255 408**
**DE--B-- 1 265 842**
**DE--B-- 1 463 888**
**FR--A-- 1 118 316**

(73) Patentinhaber: **Katt-Motoren-Fabrik Fock, Olberg & Co. KG**
**Bahnhofstrasse 66**
**D-3588 Homberg/Efze (DE)**

(72) Erfinder: **Lehmann, Meti**
**Lindenstrasse 30**
**D-4620 Castrop-Rauxel (DE)**

(74) Vertreter: **Zeitler, Giselher**
**Postfach 26 02 51**
**D-8000 München 26 (DE)**

Jouve, 18, rue St-Denis, 75001 Paris, France

**Beschreibung**

Die vorliegende Erfindung betrifft einen Bremsmotor gemäß dem Oberbegriff des Anspruchs 1.

Bei einem derartigen bekannten Bremsmotor (DE-B-1 265 842) werden die Bremselemente entgegen der Kraft einer Blattfeder durch einen Ringmagneten von der inneren Bremsfläche der Bremstrommel abgehoben. Bei abgeschaltetem Ringmagnet kann der Motor durch eine manuelle Lüftung gedreht werden. Bei diesem Bremsmotor sitzen die Bremselemente locker in ihren Führungen, so daß eine hohe Anpreßkraft der Führungsansätze erforderlich ist. Diese Anpreßkraft muß von dem verstellbaren dünnwandigen Ring aufgebracht werden. Hierbei ist es möglich, daß die Bremselemente mit starker Verkantung in die als Widerlager dienenden Halteleisten gepreßt werden, wodurch eine erhöhte Betätigungskraft erforderlich ist. Diese Verkantung kann sich in eine Selbstsperrung auswirken.

Der Erfindung liegt daher die Aufgabe zugrunde, einen Bremsmotor in einfacher Weise so auszugestalten, daß jederzeit, ohne wesentliche bauliche Veränderungen am Motor vornehmen zu müssen, eine robuste, funktionssichere, von Hand verstellbare Bremslüftung ohne größeren Kraftaufwand möglich ist, wobei eine Verkantung der Bremselemente vermieden werden soll.

Diese Aufgabe wird bei dem Bremsmotor gemäß der Erfindung durch die im Kennzeichen des Anspruchs 1 angegebenen Merkmale gelöst. Vorteilhafte Ausgestaltungen hiervon sind in den weiteren Ansprüchen angegeben.

Die erfindungsgemäße Ausgestaltung des Bremsmotores hat die vorteilhafte Folge, daß die vorgesehene Führung der Bremselemente deren Verkantung nicht zuläßt. Hierdurch kann in vorteilhafter Weise ein gleichmäßiger Druck auf die Bremstrommel ausgeübt werden. Dadurch ist auch eine Lüftung ohne größeren Kraftaufwand möglich.

Die Erfindung wird im folgenden in Form eines bevorzugten Ausführungsbeispiels anhand der Zeichnung näher erläutert. Es zeigen :

Fig. 1 einen Bremsmotor mit Ringmagnet zur Bremslüftung ;

Fig. 2 eine Möglichkeit der Anordnung der Bremselemente ;

Fig. 3 einen vergrößerten Ausschnitt eines Bremsmotors mit der erfindungsgemäßen Handbremslüftung ;

Fig. 4 einen zweiteiligen Ring für die Bremslüftung und

Fig. 5 und 6 die Einzelringe der Ausführung des Ringes gemäß Fig. 4.

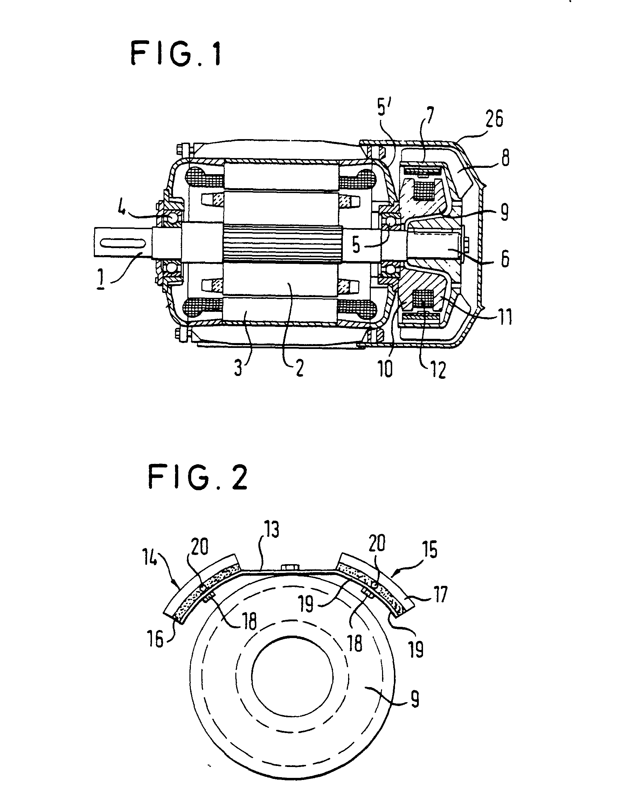

Der in Fig. 1 dargestellte, an sich bekannte Bremsmotor besitzt üblicherweise eine Welle 1, die einen Läufer 2 trägt, der mit einem Ständer 3 zusammenarbeitet. Die Welle 1 ist in Lagern 4 und 5 gelagert, die ihrerseits in Lagerschildern 4' und 5' gelagert sind. Auf einem sich über das Lager 5 hinaus erstreckenden Wellenstummel 6 der Welle 1 ist eine Bremstrommel 7 befestigt, z. B. aufgekeilt, die zur Ableitung der Wärme, insbesondere auch der Bremswärme, dienende Kühlflügel 8 trägt.

Koaxial zur Welle 1 ist ein als querschnittlich U-profilförmiger Ringmagnet 9 ausgebildeter, insbesondere in einer Ebene mit der Bremstrommel 7 liegender Elektromagnet feststehend angeordnet, der zwei nach außen abstehende Ringschenkel 10 und 11 besitzt. Zwischen den Ringschenkeln 10, 11 ist eine Magnetspule 12 angeordnet, die vorzugsweise mit Gleichstrom gespeist wird, wobei dann der eine Ringschenkel den Nordpol und der andere den Südpol bildet. Auch kann der Ringmagnet 9 rotierbar angeordnet sein und die Bremstrommel 7 stillstehen.

Zwischen Ringmagnet 9 und Bremstrommel 7 sind an einer Blattfeder 13 angeordnete, durch die Blattfeder 13 gegen die Bremstrommel 7 drückbare Bremselemente 14, 15 befestigt. Letztere bestehen aus einem etwa der Rundung der Bremsfläche der Bremstrommel 7 entsprechend gekrümmten Ankerblech 16, auf denen ein Bremsbelag 17 zum Beispiel durch Nieten oder Kleben befestigt ist. Die Bremselemente 14, 15 sind durch Schrauben 18 mit der Blattfeder 13 fest verbunden. Wenn der Ringmagnet 9 unter Spannung gesetzt wird, tauchen die Schrauben 18 in den Zwischenraum zwischen den Ringschenkeln 10, 11 ein, so daß Bereiche 19 der Blattfeder 13 oder der Ankerbleche 16 unmittelbar auf den Oberflächen der Ringschenkel 10, 11 aufliegen und ein guter magnetischer Schluß gebildet wird. In diesem Zustand sind die Bremselemente 14, 15 von der Bremsfläche der Bremstrommel 7 abgehoben. Anstelle von Innenbacken-Bremselementen 14, 15 können auch Außenbacken-Bremselemente vorgesehen sein und die Bremsfläche sich außen auf der Bremstrommel 7 befinden. Bei Abschalten der Spannung vom Ringmagnet 9 drückt die Blattfeder die Bremselemente 14, 15 gegen die Bremstrommel 7 und bremst den Motor und hält ihn in Haltestellung fest.

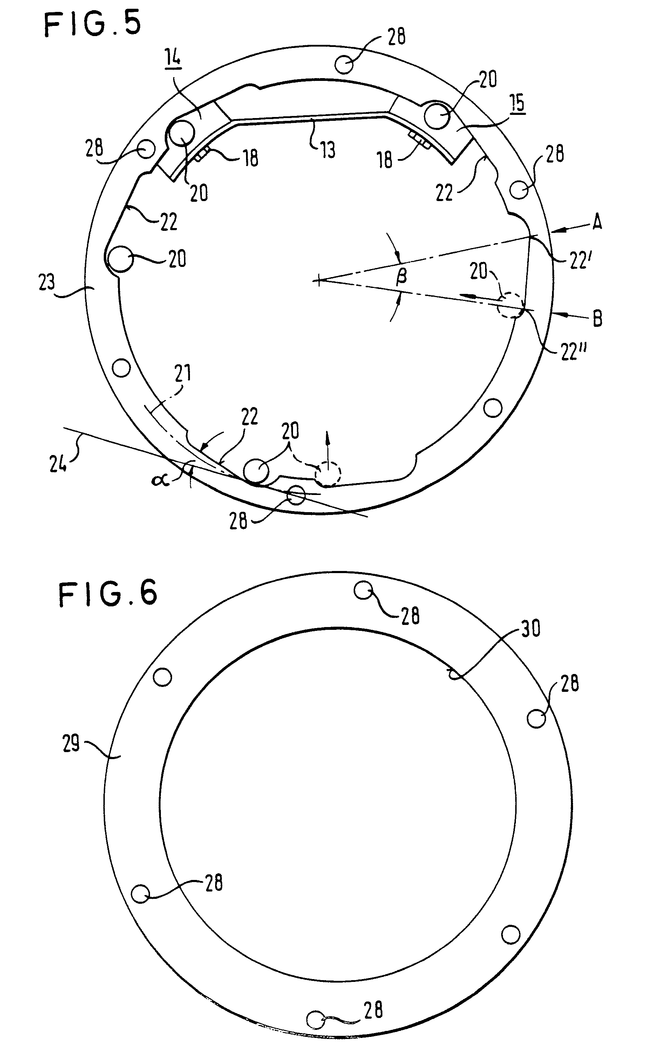

An den Bremselementen 14, 15 sind seitlich axial abstehende Führungsglieder 20 angebracht. Diese liegen vorzugsweise auf einem zur Welle 1 konzentrischen Kreis 21 (Fig. 5). Jedes Führungsglied 20 liegt im Bereich je einer schrägen Gleitbahn 22, die in oder an einem konzentrisch zur Welle 1 drehbar verstellbaren Ring 23 angebracht sind. Durch die Schräge de Gleitbahn 22 bilden diese mit einer im Schnittpunkt mit dem Kreis 21 gedachten Tangente 24 einen Winkel α. Dieser beträgt etwa 5 bis 35°, insbesondere 10 bis 20°.

Der Ring 23 ist über einen durch einen Schlitz 25 im Motorgehäuse oder einer Abdeckung 26 hindurchragenden Handhebel 27 von außen von Hand verstellbar. Der Verstellwinkel β entspricht vorzugsweise etwa der Länge einer Gleitbahn 22, d. h. die Führungsglieder 20 sind relativ zum Ring 23 von einer Endstellung A, in der sich ein Führunsglied 20 am einen Gleitbahnende 22' befindet und nicht mit der Gleitbahn 22 zusammenwirken kann, in die andere Endstellung B verschwenkbar, in der die Gleitbahn 22 im Bereich des anderen Gleitbahnendes 22″ das zugeordnete Führungsglied 20 und somit auch das Bremselement 14 bzw. 15 nach innen zieht, wie die Pfeile der gestrichelt gezeichneten Führungsglieder 20 anzeigen, und dabei den Bremsbelag 17 von der Bremstrommel 7 abhebt. Dadurch ist die Bremse gelüftet und der Motor kann gedreht werden.

Um eine gedrängte Bauweise zu erhalten, ist der Ring 23 in einem Zwischenraum zwischen dem Ringmagnet 9 zwischen der Bremstrommel 7 und dem Lagerschild 5′ vorgesehen.

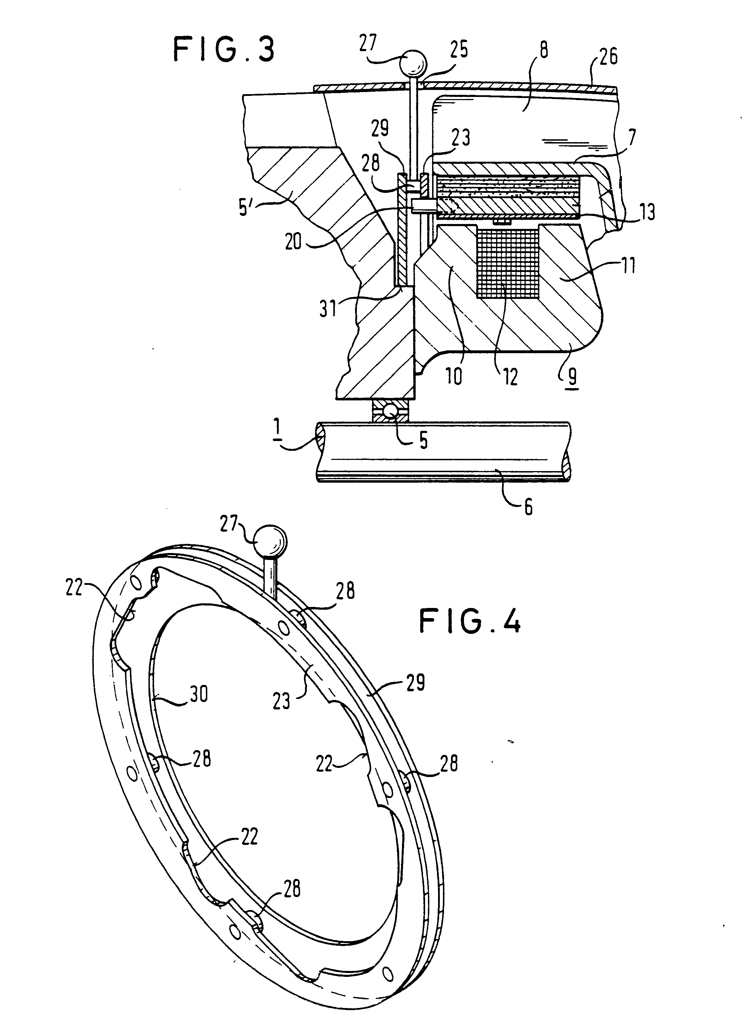

Der Ring 23 besteht aus dünnwandigem Material und kann z. B. aus einem Blech ausgestanzt sein. Damit er beim Lüften der Bremselemente 14, 15 nicht verformt wird, ist er über beispielsweise als Bolzen ausgebildete Abstandshalter 28 mit einem Versteifungsring 29 fest verbunden. Der Handhebel 27 kann dann, ggf. zusätzlich, an diesem befestigt sein und befindet sich dann vorzugsweise zwischen dem Ring 23 und dem Versteifungsring 29. Letzterer ist als Träger für den Ring 23 ausgebildet und besitzt eine Lagerstelle, die durch einen zentrischen Gleitausschnitt 30 gebildet ist. Mit letzterem ist er drehbar auf einem Ansatz 31 des Ringmagneten 9 oder des Lagerschildes 5′ angeordnet und gegen axiale Verschiebung gesichert. Die seitliche Führung erhält er durch das Lagerschild 5′ und gegebenenfalls auch durch die Bremselemente 14, 15 oder durch den Ringmagnet 9 (Fig. 3).

## Patentansprüche

1. Bremsmotor mit fest angeordneten, in Richtung zu einer Bremstrommel (7) bewegbaren, von dieser entgegen Federkraft mittels eines Elektromagneten in Form eines Ringmagneten (9) abhebbaren Bremselementen (14, 15), hiervon mittig jeweils axial abstehenden Führungsgliedern (20), die auf einem zur Motorwelle (1) konzentrischen Kreis (21) liegen und jeweils im Bereich einer schrägen Gleitbahn (22) vorgesehen sind, wobei die Gleitbahnen (22) an einem von Hand über einen von außen zugänglichen Handhebel (27) verstellbaren dünnwandigen Ring (23) angeordnet sind, der zwischen Bremstrommel (7) bzw. Ringmagnet (9) und Lagerschild (5′) vorgesehen und koaxial zur Motorwelle (1) um einen zumindest der Länge einer Gleitbahn (22) entsprechenden Winkel (α) drehbar gelagert ist, wobei in der einen Endstellung (A) jede Gleitbahn (22) das zugeordnete Führungsglied (20) nicht berührt und dessen Bremselement (14, 15) an der Bremstrommel (7) anliegt, während in Richtung zur anderen Endstellung (B) jede Gleitbahn (22) in Wirkverbindung mit dem jeweils zugeordneten Führungsglied (20) bringbar ist und die Führungsglieder (20) gemeinsam von der Bremstrommel (7) abhebbar sind, dadurch gekennzeichnet, daß die Bremselemente (14, 15) fest an einer Blattfeder (13) angebracht sind und daß der Ring (23) über Abstandshalter (28) fest mit einem Versteifungsring (29) verbunden ist, der mit einem Gleitausschnitt (30) zur drehbaren Lagerung versehen und als Träger für den Ring (23) ausgebildet ist.

2. Bremsmotor nach Anspruch 1, dadurch gekennzeichnet, daß der Gleitausschnitt (30) drehbar auf einem Ansatz (31) des Ringmagneten (9) oder des Lagerschildes (5′) angeordnet und gegen axiale Verschiebung gesichert ist.

3. Bremsmotor nach Anspruch 1 oder 2, dadurch gekennzeichnet, daß der Lagerschild (5′) und gegebenenfalls auch die Bremselemente (14, 15) oder der Ringmagnet (9) die seitliche Führung des Versteifungsringes (29) bilden.

4. Bremsmotor nach einem der Ansprüche 1 bis 3, dadurch gekennzeichnet, daß der Handhebel (27), gegebenenfalls zusätzlich, am Versteifungsring (29) angebracht ist.

## Claims

1. Self-braking motor including brake elements (14 and 15) which are firmly held, which are movable in the direction of a brake drum (7) and which can be raised from the latter against spring force by means of an electromagnet in the form of an annular magnet (9), guide members (20) which project axially through the centre of these respective brake elements and lie on a circle (21), which is concentric to the motor shaft (1) ; each guide member (20) being adjacent an inclined guideway (22), wherein the guideways (22) are arranged on a thin-walled ring (23), which can be shifted manually by a hand lever (27) which is accessible on the outside of the motor, and which ring is provided between brake drum (7) or annular magnet (9) and end shield (5′) and is mounted coaxially to the motor shaft (1), so as to be rotatable about an angle (α) which corresponds at least to the length of one guideway (22), wherein each guideway (22) does not touch its associated guide member (20) in the one limit position (A), and its brake elements (14 and 15) butts against the brake drum (7), whilst in the direction of the other limit position (B), each guideway (22) can be brought into operative engagement with the associated guide member (20) in each case, and the guide members (20) can be raised together from the brake drum (7), characterised in that the brake elements (14 and 15) are firmly fixed to a leaf spring (13) and the ring (23) is firmly connected via spacing stays (28) to a reinforcing ring (29), which is provided with a guide opening (30) for a rotatable mounting, and is designed as a support for the ring (23).

2. Self-braking motor as claimed in Claim 1, characterised in that the guide opening (30) is rotatably arranged on a lug (31) of the annular magnet (9) or of the end shield (5′) and is secured against axial movement.

3. Self-braking motor as claimed in Claim 1 or Claim 2, characterised in that the end shield (5′) and, if necessary, also the brake elements (14 and 15) or the annular magnet (9), form the lateral guide of the reinforcing ring (29).

4. Self-braking motor as claimed in one of the Claims 1 to 3, characterised in that the hand lever (27) is fixed to the reinforcing ring (29), if necessary, in an auxiliary capacity.

## Revendications

1. Moto-frein comportant des éléments de frein (14, 15) qui sont disposés de manière fixe, peuvent être déplacés en direction d'un tambour de frein (7) et être soulevés dudit tambour contre la force d'un ressort à l'aide d'un électro-aimant se présentant sous la forme d'un aimant torique (9), des organes de guidage centrés (20) qui s'écartent axialement desdits éléments, se trouvent sur un cercle (21) concentrique à l'arbre de moteur (1) et sont chacun prévus dans la zone d'une glissière inclinée (22), les glissières (22) étant disposées sur une bague à paroi mince (23) qui peut être déplacée manuellement par l'intermédiaire d'un levier à main (27) accessible de l'extérieur, est prévue entre le tambour de frein (7) ou l'aimant torique (9) et la flasque (5') et est montée mobile en rotation coaxialement à l'axe de moteur (1), selon un angle (α) correspondant au moins à la longueur d'une glissière (22), chaque glissière (22) ne touchant pas, dans l'une des positions extrêmes (A), l'organe de guidage correspondant (20) et l'élément de frein (14, 15) de ce dernier reposant sur le tambour de frein (7), tandis qu'en direction de l'autre position extrême (B), chaque glissière (22) peut être positionnée de manière à coopérer avec l'organe de guidage correspondant (20) et les organes de guidage (20) peuvent être soulevés ensemble du tambour de frein (7), caractérisé en ce que les éléments de frein (14, 15) sont montés de manière fixe sur un ressort à lames (13) et en ce que la bague (23) est reliée de manière fixe par l'intermédiaire d'un dispositif d'écartement (28) à une bague de renfort (29) qui est pourvue d'une encoche de glissement (30) pour un montage rotatif et constitue un support pour la bague (23).

2. Moto-frein selon la revendication 1, caractérisé en ce que l'encoche de glissement (30) est disposée mobile en rotation sur un épaulement (31) de l'aimant torique (9) ou de la flasque (5') et ne peut effectuer de déplacement axial.

3. Moto-frein selon la revendication 1 ou 2, caractérisé en ce que la flasque (5') et le cas échéant également les éléments de frein (14, 15) ou l'aimant torique (9) forment le guidage latéral de la bague de renfort (29).

4. Moto-frein selon l'une des revendications 1 à 3, caractérisé en ce que le levier à main (27) est le cas échéant en plus monté sur la bague de renfort (29).

# FIG.1

# FIG.2

FIG.3

FIG.4

## FIG.5

## FIG.6